# EUROPÄISCHE PATENTSCHRIFT

(11) **EP 4 504 570 B1**
(45) Veröffentlichungstag und Bekanntmachung des Hinweises auf die Patenterteilung: **30.07.2025**
(21) Anmeldenummer: 24700946.7
(22) Anmeldetag: 14.01.2024
(51) Int. Cl.: B60W 30/18, B60K 35/00, B60W 30/182, B60W 50/14, B60W 50/00

(54) **VERFAHREN ZUM BETRIEB EINER MEHRZAHL VON ASSISTENZSYSTEMEN EINES FAHRZEUGES**
METHOD FOR OPERATING A PLURALITY OF ASSISTANCE SYSTEMS OF A VEHICLE
PROCÉDÉ DE FONCTIONNEMENT D'UNE PLURALITÉ DE SYSTÈMES D'ASSISTANCE D'UN VÉHICULE

(30) Priorität: 19.01.2023 DE 102023000160
(43) Veröffentlichungstag der Anmeldung: 12.02.2025
(73) Patentinhaber: Mercedes-Benz Group AG, 70372 Stuttgart (DE)
(72) Erfinder: GLANG, Reinhard, 75378 Bad Liebenzell (DE); JANULIK, Roman, 71069 Sindelfingen (DE); REHBORN, Hubert, 71069 Sindelfingen (DE)
(74) Vertreter: Novagraaf Group
(86) Internationale Anmeldenummer: PCT/EP2024/050744
(87) Internationale Veröffentlichungsnummer: WO 2024/153566

(56) Entgegenhaltungen:
- DE-A1- 102016 224 787
- DE-A1- 102018 206 044

## Beschreibung

Die Erfindung betrifft ein Verfahren zum Betrieb einer Mehrzahl von Assistenzsystemen eines Fahrzeuges, welches datentechnisch mit einer zentralen Rechnereinheit gekoppelt ist oder situationsbedingt gekoppelt wird.

Aus der DE 10 2010 009 133 A1 sind ein Verfahren zur Unterstützung eines Fahrers beim Führen eines ein Fahrerassistenzsystem aufweisenden Kraftfahrzeuges und ein Kraftfahrzeug mit einer Systemauswahleinrichtung bekannt. Das Verfahren sieht vor, dass im Betrieb des Kraftfahrzeuges mittels einer Fahrzeugsensoreinrichtung fortlaufend Fahrdaten erfasst und an eine Systemauswahleinrichtung zur Auswertung übermittelt werden und dass von der Systemauswahleinrichtung in Abhängigkeit von einem Ergebnis der Auswertung bei Vorhandensein zumindest eines für die momentane Fahrt des Kraftfahrzeuges geeigneten Fahrerassistenzsystems in dem Kraftfahrzeug das oder die geeigneten Fahrerassistenzsysteme zu ihrer Aktivierung ausgewählt werden. Dabei erfolgt vor der automatischen Aktivierung eine Bewertung eines Ereignisses oder mehrerer Ereignisse, die zur Auswahl des oder der Fahrerassistenzsystem geführt haben.

Die US 2020/0001893 A1 beschreibt ein Verfahren zum Betreiben eines Kraftfahrzeuges mit mehreren Fahrerassistenzsystemen. Dabei umfasst das Verfahren das Einstellen eines Unterstützungsparameters über eine Bedienschnittstelle des Kraftfahrzeuges, wobei der Unterstützungsparameter angibt, inwieweit ein Fahrer eine Unterstützung durch ein Fahrerassistenzsystem wünscht. Weiterhin umfasst das Verfahren das Einstellen eines zusätzlichen Parameters über eine Bedienschnittstelle, wobei sich der zusätzliche Parameter auf einen Fahrbetrieb des Fahrzeuges bezieht. In Abhängigkeit von dem Unterstützungsparameter und dem zusätzlichen Parameter wird ein Betriebsparameter für jedes Fahrerassistenzsystem durch eine Verarbeitungsvorrichtung des Kraftfahrzeuges vorgegeben, entsprechend dem das jeweilige Fahrerassistenzsystem betrieben wird. Darüber hinaus ist in der DE 10 2011 083 944 A1 ein Verfahren zum Aktivieren eines Assistenzsystems in einem Fahrzeug beschrieben. Dabei wird nach einem Aktivierungswunsch eines Fahrerassistenzsystems durch einen Fahrer überprüft, ob der Fahrer geeignet ist, das gewünschte Fahrerassistenzsystem zu benutzen. Die Aktivierung des gewünschten Fahrerassistenzsystems wird in Abhängigkeit von der Eignung des Fahrers durchgeführt.

Aus der DE 10 2018 206 044 A1 ist ein Verfahren zum Betrieb eines Kraftfahrzeugs (1), umfassend die Schritte:
- Erfassen von die Fahrzeugumgebung betreffenden Umgebungsdaten mit einem bildgebenden Sensor (12) des Kraftfahrzeugs (1),
- Erkennen wenigstens einer Fahrbahnmarkierung (16) und/oder Fahrbahnbegrenzung (17, 18, 19) in den Umgebungsdaten,
- Auswerten einer Straßentypbedingung, die erfüllt wird, wenn in Abhängigkeit der erkannten Fahrbahnmarkierung (16) und/oder Fahrbahnbegrenzung (17, 18, 19) ermittelt wird, dass das Kraftfahrzeug (1) einen vorgegebenen Straßentyp befährt,
- Konfiguration wenigstens einer Fahrzeugeinrichtung (2, 4, 6, 7, 9, 10, 11, 22) des Kraftfahrzeugs (1) in Abhängigkeit davon, ob die Straßentypbedingung erfüllt wird.

Aus der DE 10 2016 224 787 A1 ist ein System zur Einstellung wenigstens eines Fahrdynamikparameters eines Fahrzeugs für eine vorbestimmte Strecke, wobei eine Steuereinheit des Fahrzeugs dazu eingerichtet ist, abhängig von der Strecke Daten für die Einstellung des wenigstens einen Fahrdynamikparameters mittels einer Kommunikationsschnittstelle des Fahrzeugs von einem Kommunikationssystem abzurufen und ein Signal auszugeben, das auf Basis der abgerufenen Daten anzeigt, wie der wenigstens eine Fahrdynamikparameter einzustellen ist.

Der Erfindung liegt die Aufgabe zugrunde, ein neuartiges Verfahren zum Betrieb eines Fahrzeuges mit zumindest einem Assistenzsystem anzugeben.

Die Aufgabe wird erfindungsgemäß gelöst durch ein Verfahren zum Betrieb eines Fahrzeuges mit zumindest einem Assistenzsystem, welches die in Anspruch 1 angegebenen Merkmale aufweist.

Vorteilhafte Ausgestaltungen der Erfindung sind Gegenstand der Unteransprüche.

Ein Verfahren zum Betrieb einer Mehrzahl von Assistenzsystemen eines Fahrzeuges, welches datentechnisch mit einer zentralen Rechnereinheit gekoppelt ist oder situationsbedingt gekoppelt wird, sieht erfindungsgemäß vor, dass die Assistenzsysteme in eine Anzahl von Kategorien unterteilt sind, wobei Assistenzsysteme einer Kategorie in Abhängigkeit einer erfassten momentanen Geoposition des Fahrzeuges deaktiviert werden und Assistenzsysteme einer weiteren Kategorie in Abhängigkeit erfasster dynamischer Faktoren angepasst werden.

Durch Anwendung der Verfahrens, insbesondere durch Deaktivierung der Assistenzsysteme der Kategorie und Anpassung der Assistenzsysteme der weiteren Kategorie, hat ein Nutzer des Fahrzeuges die Möglichkeit, dieses unter vergleichsweise extremen Bedingungen zu testen. Beispielsweise können in einem solchen Fahrbetrieb des Fahrzeuges Schwachstellen physikalischer Eigenschaften des Fahrzeuges, beispielsweise in Bezug auf dessen Aerodynamik, ein Fahrwerk, ein Bremssystem etc. identifiziert werden.

Mittels des Verfahrens kann das Fahrzeug für einen anderen Zweck verwendet werden, als für den es optimiert wurde, beispielsweise für einen Fahrbetrieb in einer Stadt oder auf einer Autobahn. Auf einer Rennstrecke würde ein herkömmliches System, welches die Assistenzsysteme in Abhängigkeit von einer kontinuierlichen Fahrcharakteristik-Überwachung dynamisch anpasst, unter Rennstreckenbedingungen unzureichend reagieren. Dieses herkömmliche System würde dann versuchen, die Assistenzsysteme unter der Annahme anzupassen, dass ein Optimierungskriterium darin besteht, Verkehrsregeln einzuhalten und/oder Fahrmanöver zu verhindern, die in einer Stadt oder auf einer Autobahn als unsicher gelten.

Insbesondere ermöglicht das Verfahren eine komfortablere nutzerindividuelle Konfiguration des Fahrzeuges für eine Rennstrecke.

In einer Ausführung des Verfahrens werden, wenn anhand der erfassten Geoposition des Fahrzeuges ermittelt wird, dass sich das Fahrzeug auf einer Rennstrecke befindet, die Assistenzsysteme der einen Kategorie deaktiviert. Insbesondere ist bei Anwendung des Verfahrens möglich, dass der Nutzer das Fahrzeug auf der Rennstrecke fahren kann, ohne dass beispielsweise ein Spurhalteassistent und/oder eine Abstandsregelvorrichtung des Fahrzeuges korrigierend eingreifen beziehungsweise eingreift. Der Nutzer kann das Fahrzeug durch Anwendung des Verfahrens insbesondere auf einer Rennstrecke unter Rennstreckenbedingungen fahren, ohne dass ein Assistenzsystem der einen Kategorie in einen Fahrbetrieb des Fahrzeuges eingreift, um beispielsweise eine vermeintliche Kollision mit einem vorausfahrenden Fahrzeug, da ein Abstand zwischen den beiden Fahrzeugen einen vorgegebenen Schwellwert unterschreitet, zu vermeiden.

Wenn ermittelt wird, dass sich das Fahrzeug auf einer Rennstrecke befindet, werden beziehungsweise wird in einer weiteren Ausführung eine Abstandsregelungsvorrichtung, ein Spurhalteassistent, ein Kurvenwarner und/oder eine Vorrichtung zur Fahrdynamikregelung als Assistenzsysteme der Kategorie deaktiviert. Derartige Assistenzsysteme können im aktivierten Zustand ein Austesten von Fahrzeugfunktionen auf einer Rennstrecke beschränken, so dass es beispielsweise nicht möglich ist, Schwachstellen physikalischer Eigenschaften des Fahrzeuges zu identifizieren.

In einer möglichen Ausführung werden die Assistenzsysteme der Kategorie nach einem anhand einer erfassten Geoposition des Fahrzeuges ermittelten Verlassen der Rennstrecke wieder aktiviert, so dass eine Fahrsicherheit, insbesondere durch situationsbedingtes Eingreifen der aktivieren Assistenzsysteme, im Fahrbetrieb des Fahrzeuges beispielsweise in einer Stadt oder auf einer Autobahn verbessert ist. Das jeweilige Assistenzsystem greift entsprechend seiner Funktion beispielsweise korrigierend ein, um das Fahrzeug in seiner Fahrspur zu halten oder einen Abstand zu einem vorausfahrenden Fahrzeug nicht zu verringern, um den vorgegebenen Schwellwert einzuhalten.

In einer Ausführung wird ein Befahren der Rennstrecke durch das Fahrzeug anhand erfasster Signale einer fahrzeugseitigen Umgebungssensorik detektiert. Beispielsweise erfolgt diese Detektion zur Plausibilisierung der anhand von digitalen Kartendaten ermittelten Geoposition des Fahrzeuges in Bezug auf die Rennstrecke. Beispielsweise kann anhand von auf die Rennstrecke hinweisenden Schildern ermittelt werden, dass die Rennstrecke ein Fahrziel des Fahrzeuges darstellt und das Fahrzeug auf der Rennstrecke fahren wird.

In einer möglichen Weiterbildung werden als dynamische Faktoren Kriterien eine vorliegende Wettersituation und Fahrbahneigenschaften der Rennstrecke erfasst. Herrscht beispielsweise eine vergleichsweise schlechte Sicht wegen Nebels, so kann vorgesehen sein, dass Nebelscheinwerfer des Fahrzeuges automatisch eingeschaltet werden. Auch kann das Einschalten einer Nebelschlussleuchte automatisch erfolgen, wenn eine Sichtweite einen vorgegebenen Wert unterschreitet. Auch eine Antriebsschlupfregelung kann bei Erfassen einer regennassen Fahrbahn als dynamischer Faktor aktiviert bleibt. Die Konfiguration, insbesondere die Anpassung der Assistenzsysteme, wird also unter Berücksichtigung von Umgebungsbedingungen durchgeführt.

In einer Ausführung können für die jeweilige Rennstrecke die am häufigsten verwendeten Konfigurationen des Assistenzsystems oder der Assistenzsysteme der weiteren Kategorie einem Nutzer des Fahrzeuges zur Auswahl angeboten werden. Wird erfasst, dass sich das Fahrzeug auf einer Rennstrecke befindet, werden dem Nutzer die Konfigurationen angezeigt, so dass dieser durch Bestätigen gewünschte Konfigurationen auswählt, so dass die einzelnen Assistenzsysteme beispielsweise nicht einzeln angepasst werden müssen. Beispielweise handelt es sich bei den Konfigurationen um spezifische Rennstreckenkonfigurationen. Beispielsweise wird eine Konfiguration einer Antriebseinheit des Fahrzeuges auf ein offensives Fahrverhalten eingestellt.

In einer weiteren Ausführung werden die jeweilige Deaktivierung und/oder Konfiguration des jeweiligen Assistenzsystems in Abhängigkeit von Fahrereigenschaften des Nutzers des Fahrzeuges angeboten. Handelt es sich bei dem Nutzer des Fahrzeuges beispielsweise um einen vergleichsweise guten Fahrer und es wurde eine regennasse Fahrbahn erfasst, so werden die Assistenzsysteme deaktiviert. Ist der Nutzer aber ein mittelmäßiger Fahrer und die Fahrbahn ist regennass, dann bleibt beispielsweise die Antriebsschlupfregelung des Fahrzeuges aktiviert.

Weiterhin ist in einer Ausführung des Verfahrens vorgesehen, dass alle Konfigurationen der Assistenzsysteme zumindest der weiteren Kategorie für die jeweilige Rennstrecke an die zentrale Rechnereinheit übermittelt und in dieser gespeichert werden. Somit liegen die Konfigurationen der Assistenzsysteme für die jeweilige Rennstrecke vor und können abgerufen oder einem Nutzer des Fahrzeuges oder eines weiteren Fahrzeuges angeboten werden, wenn sich das Fahrzeug oder ein anderes Fahrzeug auf der jeweiligen Rennstrecke befindet.

Ausführungsbeispiele der Erfindung werden im Folgenden anhand einer Zeichnung näher erläutert.

Dabei zeigt die:

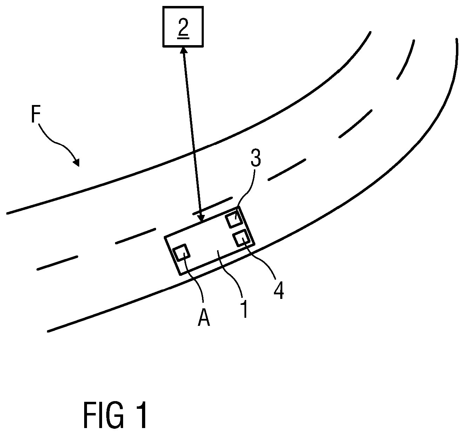

- Fig. 1: schematisch einen Fahrbahnabschnitt einer Rennstrecke mit einem Fahrzeug und eine zentrale Rechnereinheit.

Die einzige Figur zeigt einen Fahrbahnabschnitt F einer Rennstrecke mit einem Fahrzeug 1 und eine zentrale Rechnereinheit 2.

Im Allgemeinen ist bekannt, dass eine Nutzung eines Fahrzeuges 1 auf einer Rennstrecke ein vergleichsweise beliebtes Hobby bei Nutzern von Fahrzeugen 1, insbesondere Sportfahrzeugen, ist. Das Fahrzeug 1 weist eine Mehrzahl von Assistenzsystemen A auf, welche in einen Fahrbetrieb des Fahrzeuges 1 eingreifen, beispielsweise um eine Kollision zwischen dem Fahrzeug 1 und einem potentiellen Kollisionsobjekt zu vermeiden. Verlässt das Fahrzeug 1 beispielsweise wegen Unaufmerksamkeit seines Nutzers eine Fahrspur, so führt ein Spurhalteassistent eine Lenkbewegung aus, um das Fahrzeug 1 zurück in seine Fahrspur zu führen.

Hat der Fahrer des Fahrzeuges 1 seine Vorrichtung zur Abstandsregelung aktiviert, folgt das Fahrzeug 1 einem vorausfahrenden Fahrzeug in einem vorgegebenen Abstand. Wird dieser Abstand beispielsweise durch Verzögerung des vorausfahrenden Fahrzeuges und/oder durch Beschleunigung des Fahrzeuges 1 unterschritten, wird das Fahrzeug 1 abgebremst, um den Abstand zu dem vorausfahrenden Fahrzeug wieder zu erhöhen.

All diese Assistenzfunktionen sind bei einem Fahrbetrieb des Fahrzeuges 1 auf einer Rennstrecke von dem Nutzer des Fahrzeuges 1 unerwünscht, da der Nutzer sein Fahrzeug 1 unter extremen Bedingungen auf der Rennstrecke testen möchte, ohne dass ein Assistenzsystem A eingreift. Beispielsweise können im Fahrbetrieb des Fahrzeuges 1 physikalische Eigenschaften des Fahrzeuges 1 getestet werden, wodurch Schwachstellen, zum Beispiel in Bezug auf eine Aerodynamik, ein Fahrwerk, ein Bremssystem etc., des Fahrzeuges 1 identifiziert werden können. Insbesondere soll das Testen des Fahrzeuges 1 mit vollständig oder teilweise deaktivierten Assistenzsystemen A ermöglicht werden.

Im Folgenden wird ein Verfahren zum Betrieb einer Mehrzahl von Assistenzsystemen A des Fahrzeuges 1 beschrieben. Dabei ist das Fahrzeug 1 datentechnisch mit einer zentralen Rechnereinheit 2 gekoppelt oder das Fahrzeug 1 kann situationsbedingt mit der zentralen Rechnereinheit 2 gekoppelt werden. Beispielsweise umfasst das Fahrzeug 1 als Assistenzsysteme A eine Vorrichtung zur Abstandsregelung, einen Spurhalteassistenten, einen Kurvenwarner und eine Vorrichtung zur Fahrdynamikregelung.

Die Assistenzsysteme A des Fahrzeuges 1 werden zwei Kategorien zugeordnet, wobei die Assistenzsysteme A in Abhängigkeit von einer momentanen Geoposition des Fahrzeuges 1 und dynamischen Faktoren, beispielsweise von einer vorliegenden Wettersituation und/oder Fahrereigenschaften eines Nutzers des Fahrzeuges 1, aktiviert, deaktiviert oder angepasst werden.

Die einer Kategorie zugeordneten Assistenzsysteme A werden in Abhängigkeit der Geoposition des Fahrzeuges 1 aktiviert und deaktiviert und einer weiteren Kategorie zugeordnete Assistenzsysteme A werden in Abhängigkeit erfasster vorliegender dynamischer Faktoren, welche insbesondere zeitlich-räumliche Kriterien darstellen, angepasst.

Das Fahrzeug 1 weist ein Navigationssystem 3 mit einer digitalen Karte auf, wobei eine momentane Geoposition des Fahrzeuges 1 mittels einer Positionsbestimmungseinheit des Navigationssystems 3 regelmäßig erfasst und beispielsweise in zyklischen Abständen an die zentrale Rechnereinheit 2 übermittelt wird.

Wird fahrzeugseitig eine Geoposition des Fahrzeuges 1, insbesondere anhand von Kartendaten, erfasst, und ermittelt, dass sich das Fahrzeug 1 auf einer Rennstrecke befindet, dann werden die Assistenzsysteme A der einen Kategorie deaktiviert.

Beispielsweise kann die Ermittlung, dass sich das Fahrzeug 1 auf einer Rennstrecke befindet, zum Beispiel anhand einer erstellten und in einem Telematiksystem des Fahrzeuges 1 hinterlegten Datenbank, welche Ortsdaten verschiedener Rennstrecken enthält, erfolgen. Beispielsweise kann die Datenbank durch den Nutzer des Fahrzeuges 1 manuell erweitert werden.

Auch kann vorgesehen sein, dass der Nutzer des Fahrzeuges 1 aktiv in einen sogenannten Mikroservice, insbesondere ein Anwendungsprogramm, des Fahrzeuges 1 eingibt, dass er sich mit seinem Fahrzeug 1 auf einer Rennstrecke befindet.

Wird ermittelt, dass sich das Fahrzeug 1 auf einer Rennstrecke befindet, werden, an diese Rennstrecke angepasst, die der einen Kategorie zugeordneten Assistenzsysteme A des Fahrzeuges 1 deaktiviert. Bei diesen Assistenzsystemen A handelt es sich insbesondere um die Vorrichtung der Abstandsregelung, den Spurhalteassistenten, den Kurvenwarner und die Vorrichtung zur Fahrdynamikregelung.

Mittels einer Umgebungssensorik 4 erfasste Signale und/oder von der zentralen Rechnereinheit 2 empfangene Signale werden beispielsweise fahrzeugseitig ausgewertet und somit dynamische Faktoren, wie zum Beispiel eine vorliegende Wettersituation und Fahrbahneigenschaften, ermittelt.

In Abhängigkeit der ermittelten dynamischen Faktoren werden die der weiteren Kategorie zugeordneten Assistenzsysteme A und/oder Fahrzeugfunktionen angepasst. Auch kann vorgesehen sein, dass die Assistenzsysteme A der einen Kategorie in Abhängigkeit von ermittelten dynamischen Faktoren, beispielsweise aufgrund einer vergleichsweise geringen Sichtweite, angepasst werden. Insbesondere wenn es regnet, wird die Antriebsschlupfregelung nicht deaktiviert, so dass Fahrzeugräder beim Anfahren des Fahrzeuges 1 nicht durchdrehen und ein seitliches Ausbrechen des Fahrzeuges 1 weitestgehend verhindert wird.

Für eine jeweilige Rennstrecke werden die am häufigsten vorgenommenen Konfigurationen, beispielsweise in Bezug auf einen Reifendruck, Einstellungen eines Heckspoilers und/oder eines Frontsplitters etc., dem Nutzer des jeweiligen Fahrzeuges 1 zur Auswahl angeboten. Wählt der Nutzer eine der angebotenen Konfigurationen aus, werden die Assistenzsysteme A, beispielsweise beider Kategorien, deaktiviert beziehungsweise an die dynamischen Faktoren angepasst.

Das Fahrzeug 1, insbesondere der Mikroservice, bietet in einer Ausführung die jeweilige Konfiguration über ein regelbasiertes System mit Fahrereigenschaften des Nutzers, die aktuellen dynamischen Faktoren und die vorhandenen Assistenzsysteme A des Fahrzeuges 1 in einer geeigneten Konfiguration an. Handelt es sich bei dem Nutzer des Fahrzeuges 1 beispielsweise um einen vergleichbaren guten Fahrer und die Fahrbahn ist regennass, sind die Assistenzsystem A deaktiviert.

Handelt es sich bei dem Nutzer um einen mittelmäßigen Fahrer und die Fahrbahn ist regennass, so sieht eine entsprechende Konfiguration vor, dass ein Assistenzsystem A zur Antriebsschlupfregelung des Fahrzeuges 1 aktiviert bleibt.

Eine Antriebseinheit des Fahrzeuges 1 wird, wenn ermittelt wird, dass sich das Fahrzeug 1 auf einer Rennstrecke befindet, auf ein offensives Fahrverhalten konfiguriert.

Auch sieht das Verfahren vor, dass eine akustische Ausgabe von an die dynamischen Faktoren angepassten Assistenzsystemen A deaktiviert wird, wenn sich das Fahrzeug 1 auf einer Rennstrecke befindet. Somit kann ein Testlauf des Fahrzeuges 1 durchgeführt werden, ohne dass dem Nutzer gegebenenfalls störende akustische Signale ausgegeben werden.

Dem Nutzer des Fahrzeuges 1 werden, insbesondere auf einer Anzeigeeinheit, beispielsweise eines Infotainmentsystems, alle fahrzeugseitig vorgenommen Einstellungsänderungen, insbesondere die Assistenzsysteme A betreffend, angezeigt. Hierbei hat der Nutzer die Möglichkeit, die vorgenommenen Einstellungsänderungen, also Konfigurationen, durch Betätigen einer Schaltfläche, zu bestätigen oder abzulehnen. Eventuell beabsichtigt der Nutzer das Fahrzeug 1 trotz, dass sich dieses auf einer Rennstrecke befindet, in einem herkömmlichen Fahrbetrieb, also mit den üblichen Konfigurationen für eine Stadtfahrt oder eine Autobahnfahrt, zu bewegen.

Nachdem das Fahrzeug 1 die Rennstrecke verlassen hat und das Verlassen fahrzeugseitig erfasst wird, beispielsweise anhand der Kartendaten des Navigationssystems 3, werden die rennstreckenbedingt deaktivierten Assistenzsysteme A wieder aktiviert und die Konfigurationen für einen herkömmlichen Fahrbetrieb des Fahrzeuges 1 durchgeführt. Dies erfolgt entweder automatisch oder nach Bestätigung durch den Nutzer des Fahrzeuges 1.

Mittels der zentralen Rechnereinheit 2, mit der das Fahrzeug 1 datentechnisch gekoppelt ist, werden alle geänderten Konfigurationen für die Rennstrecke für das jeweilige Fahrzeug 1 gespeichert.

Bei einem nächsten Besuch der Rennstrecke durch das Fahrzeug 1 und den Nutzer werden die Konfigurationen, beispielsweise automatisch, von der zentralen Rechnereinheit 2 abgerufen und dem Nutzer zur Einstellung angeboten. Der Nutzer hat dann die Möglichkeit, insbesondere in Abhängigkeit erfasster dynamischer Faktoren, die Einstellungen des Fahrzeuges 1 vom letzten Besuch oder gegebenenfalls von einem der letzten Besuche auszuwählen.

Beispielsweise wird mittels der zentralen Rechnereinheit 2 und einer vorhandenen Auswertemöglichkeit analysiert, wie viele Fahrzeuge 1 auf Rennstrecken von dem Mikroservice Gebrauch machen.

Weiterhin sieht das Verfahren vor, dass dem Nutzer eine Übersicht von Rennstrecken und jeweilige individuelle Konfigurationen angeboten werden, wobei dem Nutzer, beispielsweise basierend auf seinem Fahrverhalten und seinen Fahrereigenschaften, eine bestimmte Rennstrecke empfohlen wird.

In einer möglichen Ausführung werden dem Nutzer des Fahrzeuges 1 individuelle, streckenabhängige Vorschläge gemacht, welche dazu führen, dass das Fahrzeug 1 anhand von Einstelländerungen, beispielsweise durch Verringern oder Erhöhen des Reifendruckes, Heckspoilereinstellungen, Frontsplittereinstellungen etc. eine Fahrgeschwindigkeit des Fahrzeuges 1 erhöhen kann.

Auch wird dem Nutzer des Fahrzeuges 1 die Möglichkeit geboten, Konfigurationen von Fahrzeugeinstellung von anderen Nutzern zu übernehmen, beispielsweise in Bezug auf die Antriebsschlupfkontrolle.

## Patentansprüche

1. Verfahren zum Betrieb einer Mehrzahl von Assistenzsystemen (A) eines Fahrzeuges (1),
**dadurch gekennzeichnet, dass**
- die Assistenzsysteme (A) in eine Anzahl von Kategorien unterteilt sind, wobei
- Assistenzsysteme (A) einer Kategorie in Abhängigkeit einer erfassten momentanen Geoposition des Fahrzeuges (1) deaktiviert werden und
- Assistenzsysteme (A) einer weiteren Kategorie in Abhängigkeit erfasster dynamischer Faktoren angepasst werden.

2. Verfahren nach Anspruch 1,
**dadurch gekennzeichnet, dass** wenn anhand der erfassten Geoposition des Fahrzeuges (1) ermittelt wird, dass sich das Fahrzeug (1) auf einer Rennstrecke befindet, die Assistenzsysteme (A) der einen Kategorie deaktiviert werden.

3. Verfahren nach Anspruch 1 oder 2,
**dadurch gekennzeichnet, dass** wenn ermittelt wird, dass sich das Fahrzeug (1) auf einer Rennstrecke befindet, eine Abstandsregelungsvorrichtung, ein Spurhalteassistent, ein Kurvenwarner und/oder eine Vorrichtung zur Fahrdynamikregelung als Assistenzsysteme (A) der Kategorie deaktiviert werden beziehungsweise wird.

4. Verfahren nach Anspruch 2 oder 3,
**dadurch gekennzeichnet, dass** die Assistenzsysteme (A) der einen Kategorie nach einem anhand einer erfassten Geoposition des Fahrzeuges (1) ermittelten Verlassen der Rennstrecke wieder aktiviert werden.

5. Verfahren nach einem der Ansprüche 2 bis 4,
**dadurch gekennzeichnet, dass** ein Befahren der Rennstrecke durch das Fahrzeug (1) anhand erfasster Signale einer fahrzeugseitigen Umgebungssensorik (4) detektiert wird.

6. Verfahren nach einem der Ansprüche 2 bis 5,
**dadurch gekennzeichnet, dass** als dynamische Faktoren eine vorliegende Wettersituation und/oder Fahrbahneigenschaften der Rennstrecke erfasst werden beziehungsweise wird.

7. Verfahren nach einem der Ansprüche 2 bis 6,
**dadurch gekennzeichnet, dass** für die jeweilige Rennstrecke am häufigsten verwendete Konfigurationen des Assistenzsystems (A) oder der Assistenzsysteme (A) der weiteren Kategorie einem Nutzer des Fahrzeuges (1) zur Auswahl angeboten werden.

8. Verfahren nach Anspruch 7,
**dadurch gekennzeichnet, dass** die jeweilige Deaktivierung und/oder Konfiguration in Abhängigkeit von Fahrereigenschaften des Nutzers des Fahrzeuges (1) angeboten werden beziehungsweise wird.

9. Verfahren nach einem der Ansprüche 2 bis 8,
**dadurch gekennzeichnet, dass** alle Konfigurationen der Assistenzsysteme (A) zumindest der weiteren Kategorie für die jeweilige Rennstrecke an eine zentrale Rechnereinheit (2) übermittelt und in dieser gespeichert werden.

## Claims

1. Method for operating a plurality of assistance systems (A) of a vehicle (1),
**characterized in that**
- the assistance systems (A) are divided into a number of categories,
- assistance systems (A) of one category being deactivated depending on a captured current geoposition of the vehicle (1) and
- assistance systems (A) of another category being adapted depending on captured dynamic factors.

2. Method according to claim 1,
**characterized in that** if it is determined from the captured geoposition of the vehicle (1) that the vehicle (1) is on a racetrack, the assistance systems (A) of the one category are deactivated.

3. Method according to either claim 1 or claim 2,
**characterized in that** if it is determined that the vehicle (1) is on a racetrack, a distance control device, a lane departure warning system, a curve warning system and/or a device for controlling vehicle dynamics are or is deactivated as assistance systems (A) of the category.

4. Method according to either claim 2 or claim 3,
**characterized in that** the assistance systems (A) of the one category are reactivated after the vehicle (1) has left the racetrack as determined on the basis of a captured geoposition of the vehicle.

5. Method according to any of claims 2 to 4,
**characterized in that** the vehicle (1) is detected when driving on the racetrack on the basis of signals captured by an on-board environmental sensor system (4).

6. Method according to any of claims 2 to 5,
**characterized in that** an existing weather situation and/or road surface characteristics of the racetrack are or is captured as dynamic factors.

7. Method according to any of claims 2 to 6,
**characterized in that** configurations of the assistance system (A) or the assistance systems (A) of the other category most frequently used for the relative racetrack are offered to a user of the vehicle (1) for selection.

8. Method according to claim 7,
**characterized in that** the relative deactivation and/or configuration are or is offered depending on the driver characteristics of the user of the vehicle (1).

9. Method according to any of claims 2 to 8,
**characterized in that** all configurations of the assistance systems (A) of at least the other category for the relative racetrack are transmitted to a central computer unit (2) and stored therein.

## Revendications

1. Procédé permettant de faire fonctionner une pluralité de systèmes d'aide à la conduite (A) d'un véhicule (1),
**caractérisé en ce que**
- les systèmes d'aide à la conduite (A) sont divisés en un certain nombre de catégories, dans lequel
- les systèmes d'aide à la conduite (A) d'une catégorie sont désactivés en fonction d'une géoposition momentanée répertoriée du véhicule (1), et
- les systèmes d'aide à la conduite (A) d'une autre catégorie sont adaptés en fonction de facteurs dynamiques répertoriés.

2. Procédé selon la revendication 1,
**caractérisé en ce que,** lorsque le fait que le véhicule (1) se trouve sur un circuit de course est déterminé à l'aide de la géoposition répertoriée du véhicule (1), les systèmes d'aide à la conduite (A) de l'une catégorie sont désactivés.

3. Procédé selon la revendication 1 ou 2,
**caractérisé en ce que,** lorsque le fait que le véhicule (1) se trouve sur un circuit de course est déterminé, un dispositif de régulation d'espacement entre véhicules, une assistance de maintien de voie, un avertisseur de virage et/ou un dispositif permettant le contrôle de stabilité sont désactivés en tant que systèmes d'aide à la conduite (A) de la catégorie.

4. Procédé selon la revendication 2 ou 3,
**caractérisé en ce que** les systèmes d'aide à la conduite (A) de l'une catégorie sont réactivés après une sortie du circuit de course déterminée à l'aide d'une géoposition répertoriée du véhicule (1).

5. Procédé selon l'une des revendications 2 à 4,
**caractérisé en ce qu'**un passage sur le circuit de course par le véhicule (1) est détecté à l'aide de signaux répertoriés d'une technologie de capteurs environnementaux (4) côté véhicule.

6. Procédé selon l'une des revendications 2 à 5,
**caractérisé en ce qu'**une situation météorologique présente et/ou des caractéristiques de conduite du circuit de course sont répertoriées en tant que facteurs dynamiques.

7. Procédé selon l'une des revendications 2 à 6,
**caractérisé en ce que** des configurations les plus fréquemment utilisées pour le circuit de course respectif du système d'aide à la conduite (A) ou des systèmes d'aide à la conduite (A) de l'autre catégorie sont proposées à la sélection à un utilisateur du véhicule (1).

8. Procédé selon la revendication 7,
**caractérisé en ce que** la désactivation et/ou la configuration respective sont proposées en fonction des caractéristiques de conduite de l'utilisateur du véhicule (1).

9. Procédé selon l'une des revendications 2 à 8,
**caractérisé en ce que** toutes les configurations des systèmes d'aide à la conduite (A) d'au moins l'autre catégorie pour le circuit de course respectif sont transmises à une unité de calcul centrale (2) et sont mémorisées dans celle-ci.
